(19) Europäisches Patentamt
European Patent Office
Office européen des brevets

(11) **EP 2 172 934 A1**

(12) **EUROPEAN PATENT APPLICATION**

(43) Date of publication:
**07.04.2010 Bulletin 2010/14**

(51) Int Cl.:
***G11B 7/007*** (2006.01)

(21) Application number: **08305643.2**

(22) Date of filing: **06.10.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | • **Przygodda, Frank**<br>**78050 Villlingen-Schwenningen (DE)**<br>• **Knittel, Joachim**<br>**78532 Tuttlingen (DE)**<br>• **Schöpper, Markus**<br>**78549 Spaichingen (DE)** |
| (71) Applicant: **Thomson Licensing**<br>**92443 Issy-les-Moulineaux Cedex (FR)** | (74) Representative: **Arnold, Klaus-Peter**<br>**Deutsche Thomson OHG**<br>**European Patent Operations**<br>**Karl-Wiechert-Allee 74**<br>**30625 Hannover (DE)** |
| (72) Inventors:<br>• **Krause, Michael**<br>**78050 Villingen-Schwenningen (DE)** | |

(54) **Optical storage medium comprising marks with different orientation, and respective apparatus for reading of data.**

(57)   The optical storage medium comprises a substrate layer and a data layer with a mark/space structure arranged in tracks (Tn), wherein a sequence of marks of a first track (T1; T3) has a first orientation ($\alpha$1) with regard to the track direction (t) and a sequence of marks of a neighboring track (T2; T4) has a second orientation ($\alpha$2) being different from the first orientation ($\alpha$1). The marks of the first track (T1; T3) are inclined to the track direction for example by a positive angle and the marks of a neighboring track are inclined to the track direction by a negative angle and the orientation of marks of consecutive tracks (Tn, Tn+1) is alternating between the first orientation ($\alpha$1) and the second orientation ($\alpha$2). The optical storage medium is in particular an optical disc, on which the tracks (Tn) are arranged as spirals, circular rings or segmented circular rings.

Fig. 2

**Description**

**TECHNICAL FIELD OF THE INVENTION**

The present invention relates to an optical storage medium, which comprises a substrate layer, a data layer with a mark/space structure, in particular a read-only data layer with a pit/land structure, arranged in tracks on the substrate layer, and to a respective apparatus for reading of data. In a preferred embodiment, the optical storage medium comprises a mask layer with a super resolution near field structure for storing of data with high data density.

**BACKGROUND OF THE INVENTION**

Optical storage media are media in which data are stored in an optically readable manner, for example by means of a pickup comprising a laser for illuminating the optical storage medium and a photo-detector for detecting the reflected light of the laser beam when reading the data. In the meanwhile a large variety of optical storage media are available, which are operated with different laser wavelength, and which have different sizes for providing storage capacities from below one Gigabyte up to 50 Gigabyte (GB). The formats include read-only formats (ROM) such as Audio CD and Video DVD, write-once optical media as well as rewritable formats. Digital data are stored on these media along tracks in one or more layers of the media.

The storage medium with the highest data capacity is at present the Blu-Ray disc (BD), which allows to store 50 GB on a dual layer disc. Available formats are at present for example read-only BD-ROM, re-writable BD-RE and write once BD-R discs. For reading and writing of a Blu-Ray disc an optical pickup with a laser wavelength of 405 nm is used. On the Blu-Ray disc a track pitch of 320 nm and a mark length from 2T to 8T, maximum 9T, is used, where T is the channel bit length, which corresponds to a length of 69 - 80 nm. Further information about the Blu-Ray disc system is available for example from the Blu-Ray group via Internet: www.blu-raydisc.com.

New optical storage media with a super-resolution near-field structure (Super-RENS) offer the possibility to increase the data density of the optical storage medium by a factor of three to four in one dimension in comparison with the Blu-Ray disc. This is possible by using a so-called Super-RENS structure or layer, which is placed above the data layer of the optical storage medium, and which significantly reduces the effective size of a light spot used for reading from or writing to the optical storage medium. The super-resolution layer is also called a mask layer because it is arranged above the data layer and by using specific materials only the high intensity center part of a laser beam can penetrate the mask layer. Also other mechanisms for super-resolution are known, e.g. by using a mask layer which shows an increased reflectivity at higher laser power.

The Super-RENS effect allows to record and read data stored in marks of an optical disc, which have a size below the resolution limit of an optical pickup used for reading or writing the data on the disc. As known, the diffraction limit of the resolution of a pickup is about lambda/(2*NA), where lambda is the wavelength and NA the numerical aperture of the objective lens of the pickup. The super RENS effect allows to increase the resolution of the pickup for reading of the marks on an optical disc in track direction, but does not allow to reduce the track pitch, because then problems e.g. with crosstalk occur caused by the neighboring tracks.

In US 5,880,838, a system and method for measuring dimensions of microelectronic structures is described, which uses a polarized light beam being focused onto small objects to measure geometric structures. The objects are illuminated with TE and TM polarized light and the reflective TE and TM fields are used as a reference to analyze phase and amplitude changes to determine the geometrical parameters of the objects. For geometrically structures below the wavelength of the illuminating light beam, the TM and the TE fields are affected differently due to the diffraction of the objects. For pits with widths between lambda/2 and lambda of the illuminating light, the phase depths for TE polarized light varies almost a quarter wave, but remains essentially constant for TM polarized light.

**SUMMARY OF THE INVENTION**

The optical storage medium according to the invention comprises a substrate layer and a data layer with a mark/space structure arranged in tracks wherein a sequence of marks of a first track have a first orientation with regard to the track direction, and a sequence of marks of a neighboring track have a second orientation being different from the first orientation. The orientation of marks of consecutive neighboring tracks is in particular alternating between the first orientation and the second orientation. The marks of the first track are inclined for example by a positive angle with regard to the track direction and the marks of a neighboring second track are inclined to the track direction by a negative angle.

An apparatus for reading data of the optical storage medium comprises a pickup utilizing polarized light for reading data on the tracks of the storage medium. The pickup provides a reading beam having two polarization components, one component being more sensitive to marks of a track having the first orientation, and the other polarization component being more sensitive to marks of a track having the second orientation. The pickup comprises further two separated detectors for detecting individually the two polarization components of the reflected light. Because of the inclination of the marks, the first detector is more sensitive to a track having marks of the first orientation and the second detector is more sensitive to a track having marks of the second orientation.

The optical storage medium is in a preferred embodiment a read-only optical disc comprising pits and lands as marks and spaces and the tracks are arranged on the optical disc as one or two spirals. In case of two spirals, one of the spirals comprises pits having only or essentially only the first orientation with regard to the track direction, and the other spiral has only or essentially only pits having the second orientation with regard to the track direction. Both spirals are interleaved with each other, so that the two spirals provide tracks with pits such, that the orientation of pits of consecutive neighboring tracks is alternating between the first orientation and the second orientation.

In case the disc comprises only one spiral for the data of the optical disc, then the orientation of the marks changes periodically along the spiral between the first orientation and the second orientation to provide a tracking structure, in which the orientation of pits of consecutive neighboring tracks is alternating between the first orientation and the second orientation. The single spiral can be composed therefore of sequences of pits having only the first orientation and sequences of pits having only the second orientation. By providing alternatingly sequences of both orientations of an appropriate length, a track structure can be provided with tracks, for which the orientation of pits of consecutive neighboring tracks is alternating between the first orientation and the second orientation. The length of the sequence may correspond for example with a circumference of 360°.

Because of the different orientation of marks of neighboring tracks, the crosstalk signal coming from neighboring tracks is considerably reduced. The track pitch of the tracks can be reduced therefore with regard to prior art optical storage media using tracks with marks of only the same orientation. The invention is therefore in particular applicable for new high density optical storage media, for example Super-RENS optical discs. When using a pickup having a laser with a blue laser diode providing a reading beam with a wavelength of about 405 nm, then the track pitch between neighboring tracks can be reduced below 280 nm, which is far below the standard track pitch of 320 nm for a Blu-Ray disc.

## BRIEF DESCRIPTION OF THE DRAWINGS

Preferred embodiments of the invention are explained now in more detail below by way of example with reference to schematic drawings, which show:

| | |
|---|---|
| Fig. 1 | a part of an optical storage medium in a cross section, having a layer structure with a super resolution near field structure layer, |
| Fig. 2 | a small area of an optical disc showing tracks with marks of different orientations, |
| Fig. 3 | a track structure of a prior art optical disc having tracks with marks oriented in track direction, |
| Figs. 4a, 4b | geometrical analysis for calculating effective pit widths of inclined pits, |
| Fig. 5 | Table showing effective pit widths for 2T - 8T pits in accordance with figure 2, |
| Fig. 6 | phase depths as a function of the pit width for pits having a geometrical pit depth equal to a quarter wavelength of the reading beam, |
| Fig. 7 | simulated high frequency readout signals for track sections of figures 2 and 3 for two different track pitches, |
| Fig. 8 | crosstalk signals as a function of the track pitch based on the readout signals of figure 7, |
| Figs. 9a, 9b | track structures with tracks being represented by one or two spirals on an optical disc, and |
| Fig. 10 | apparatus for reading data from an optical storage medium having a track structure in accordance with figure 2. |

## DETAILED DESCRIPTION OF PREFERRED EMBODIMENTS

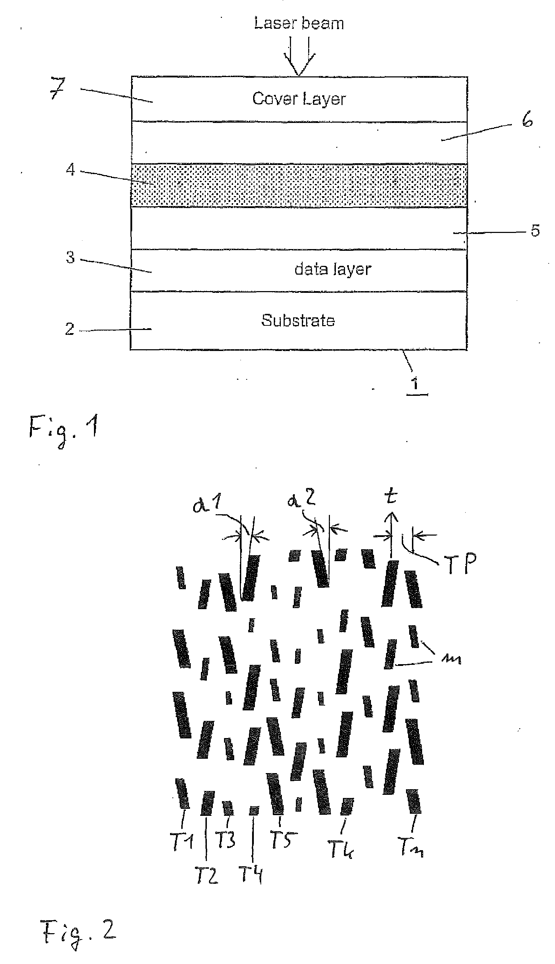

In Fig. 1 an optical storage medium 1 is shown in a cross section in a simplified manner, not to scale. On a substrate 2 of the storage medium 1 a data layer 3 is arranged having a data structure consisting of marks and spaces arranged in essentially parallel tracks. The optical storage medium 1 is for example a read-only (ROM) optical disc with a data layer comprising a reflective metallic layer, for example an aluminum layer, and the marks and spaces are represented by pits and lands, the pits being molded or embossed on the surface of the substrate 2 for representing the data layer 3. On the data layer 3 a first dielectric layer 5 is arranged and on the dielectric layer 5 a mask layer 4 is arranged for providing a super-resolution near-field effect (Super-RENS). The optical storage medium 1 is in particular an optical disc having a size similar to DVDs and CDs.

On the mask layer 4 a second dielectric layer 6 is arranged and as a further layer, a cover layer 7 is arranged on the second dielectric layer 6 as a protective layer. For reading the data of the data layer 3, a laser beam is applied from the top of the storage medium 1, penetrating first the cover layer 7. The first and second dielectric layers 5, 6 comprise for example the material ZnS-SiO$_2$. The substrate 2 and the cover layer 7 may consist of a plastic material, as known from DVDs and CDs. For some ROM Super-RENS discs, the reflective metallic layer may be omitted, when a super-resolution near field structure is used, which does not provide an increase in transmittance due to a heating effect, but works with another Super-RENS effect.

With the Super-RENS effect, the resolution of an optical pickup can be increased in track direction by a considerable amount, for example by a factor of three or four. This allows a reduction of the size of the marks and spaces on the optical storage medium in track direction. But the Super-RENS effect as such does not allow to reduce the track pitch below the optical resolution limit of the pickup unit. If a push-pull effect is used for the tracking regulation of the optical pickup, the reduction of the track pitch is limited by the fact that the first order refracted beams have to be collected by the objective lens of the optical pickup. Otherwise there is no push-pull signal, because this signal is generated by the interference of the $0^{th}$ order and the $1^{st}$ order beams as reflected from the optical storage medium. For a Blu-Ray pickup this occurs at a track pitch of about 280 nm. The standard track pitch of a Blu-Ray disc is 320 nm.

To overcome this problem, the marks m of tracks T1 - Tn are inclined with regard to the track direction t, as shown in figure 2, which shows a small section of a data layer of an optical storage medium in a simplified manner. A sequence of marks of a first track T1 have a first orientation with regard to the track direction, and a sequence of marks of a neighboring track T2 have a second orientation being different from the first orientation. The orientation of the marks with regard to the track direction changes therefore alternatingly for consecutive neighboring tracks. For example, all marks m of track T3 are tilted with regard to the track direction by negative angles $\alpha 2$, and all marks of the next neighboring tracks T2, T4 are tilted to the track direction by positive angles $\alpha 1$.

By using such a kind of track structure, the track pitch TP between two neighboring tracks $T_k$ and $T_{k+1}$, k=1,..., n-1 can be reduced below the diffraction based optical resolution limit of a corresponding optical pickup for reading of the data of the storage medium by still providing the possibility to read-out the data of the tracks. The storage medium is in particular a read-only optical disc, on which the tracks are arranged as spirals with a mark/space structure arranged as pits and lands. As an alternative, the tracks may be arranged not as spirals, but as circular rings or segmented circular rings similar to a track structure as known from hard disc drives.

The track structure of the embodiment shown in figure 2 corresponds with a track pitch TP = 220 nm and the marks m are inclined by positive angles $\alpha 1$ or negative angles $\alpha 2$ with an absolute value within a range of 5° - 15°, in particular within a range of 8° - 11°, depending on the length of the marks m. An inclination angle within this range is already sufficient for reducing unwanted crosstalk of neighboring tracks considerably. The marks m as shown in figure 2 vary in size from 2T to 8T, with a channel bit length T=40nm.

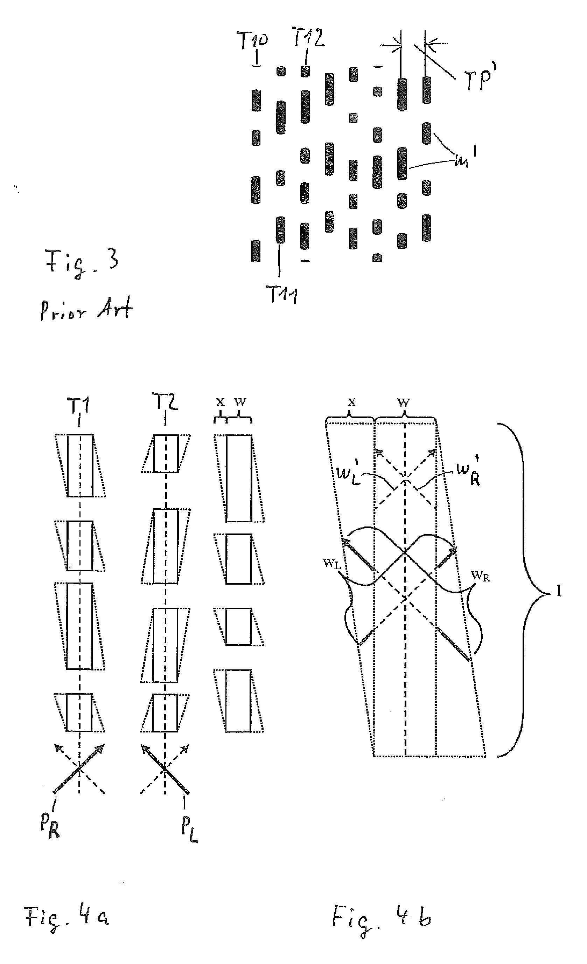

For comparison, the track structure of a section of a regular Blu-Ray ROM disc is shown in figure 3, comprising marks m' arranged in tracks T10, T11, T12,... , which have a track pitch TP' = 320 nm. With a mark/space structure of this kind the track pitch cannot be reduced below a value of about 280 nm because of tracking problems of a corresponding Blu-Ray pickup for reading of the data, which tracking problems originate in particular from crosstalk signals of neighboring tracks which are due to the limited resolution of the pickup.

An apparatus for reading data from an optical storage medium having a track structure as shown in figure 2 comprises an optical pickup for reading of the data, which utilizes the polarization of the light as reflected from the optical storage medium, when reading marks of a corresponding track. The pickup comprises a polarizer for providing a reading beam having two polarized components, a first component polarized for example by +45° and the second component polarized by -45° with regard to the track direction. The pickup comprises further two separate detectors for detecting the polarization components of the reflected light. Because of the inclination of the marks m, the first or the second detector is more sensitive for the reflected light coming from a selected track of the optical storage medium, in dependency whether the marks of the track have a positive inclination angle $\alpha 1$ or a negative inclination angle $\alpha 2$.

The pickup may provide for example a reading beam with linear polarized light, which is polarized either parallel or perpendicular to the track direction. The parallel as well as the perpendicular polarized beam includes two polarization components of equal intensity, which can be considered polarized +45° and -45° with regard to the track direction. By using a polarizing beam splitter for the reflected light, the reflected polarization components can be separated into two orthogonal linear polarized beams, which can be guided in the pickup each to one of the two separate detectors. In dependency of the orientation of the marks of a corresponding track, one of the two detectors will receive a higher light intensity and the other a lower light intensity. Therefore, the detector which is sensitive to the orientation of marks of a selected track Tk is less sensitive to the neighboring tracks Tk-1, Tk+1 because of the different orientation of the marks of tracks Tk-1, Tk+1, with the result, that the crosstalk of neighboring tracks is reduced.

For a calculation of crosstalk signals originating from a track structure of an embodiment with pits and lands corresponding with the track structure shown in figure 2, the inclined pits can be understood as composed of a rectangular part and a left and a right asymmetric extension, as shown in figure 4a, which shows a track T1 comprising pits with a negative inclination angle and a neighboring track T2 with pits having a positive inclination angle. The pits of the tracks T1 and T2 have different effective pit widths with regard to linear polarization components $P_R$ and $P_L$ as provided by the reading beam.

As shown in figure 4b, the inclined pits can be understood as composed of a rectangular part with a width w and a left and a right asymmetric extension having a maximum width x at its opposed insides, each having a length 1. By taking into account the length of each pit, effective pit widths $w_R$ and $W_L$ can be calculated for the light polarities $P_R$ and $P_L$. Without the extensions, the effective pit width $w_R'$ and $w_L'$ are the same for the rectangular pit shape, as shown in figure 4b, and therefore the read-out signals will be the same for the two polarization components $P_R$ and $P_L$ in this case.

By including the extensions as shown in figure 4b, the extensions add only about 50% for the effective pit width $w_L$ for the polarity $P_L$, but add more than 110% for the pit width $w_R$ for polarity $P_R$, resulting in a ratio of effective pit widths of $w_L/w_R = 0,75$. By taking into account the dimensions l, x, w, the relative difference for the effective pit widths $w_L$ and $w_R$ can be calculated for a single pit via the formula:

$$\frac{w_R - w_L}{w_R} = \frac{2xl(x+w)/(l+x)}{x(l+w) + w(l-x)} ; \qquad \text{for} \quad l > w + 2x$$

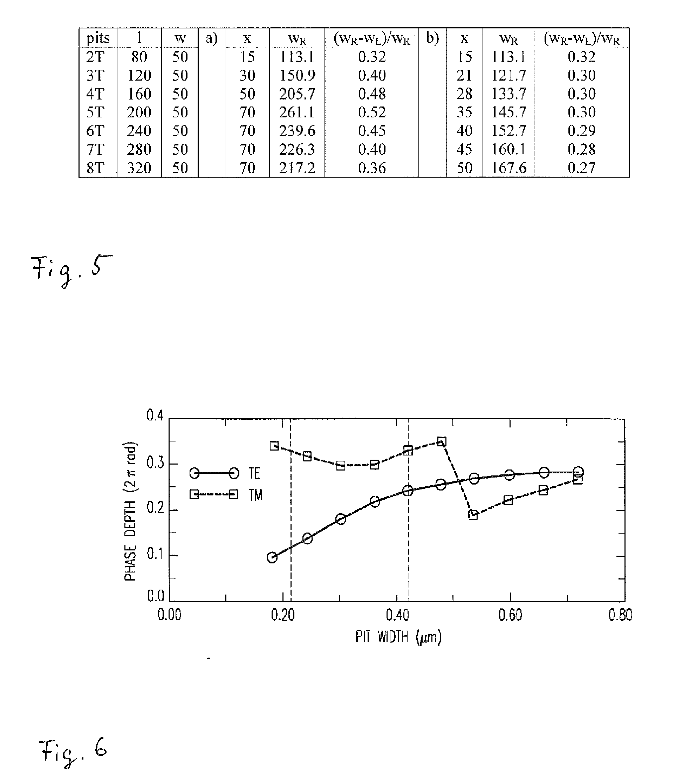

With this formula, optimized inclination angles can be specified for pits of different length as included in a specific track. For example, pits having a length of 2T - 8T are used for the track structure as shown in figure 2. For these pits, pit lengths of 2T = 80nm to 8T = 320nm are used, as shown in the table of figure 5. The pits of the table are designed for a Super-RENS ROM disc and an apparatus comprising a Blu-Ray type pickup with a laser wavelength of 405 nm and a numerical aperture NA = 0,85 for reading of the data. T is the channel bit length with T = 40nm.

For the larger pits, a smaller inclination angle with regard to the track direction is used, to avoid any interference with pits of neighboring tracks. The extensions x may be selected therefore to maximize the relative difference $(w_R - w_L)/w_R$ with regard to the length l for each pit size, as shown in table 1a of figure 5. As an alternative, the extensions x may be chosen such that a constant relative difference $(w_R - w_L)/w_R$ of the effective pit widths of about 0,30 is obtained, as shown in table 1b. The inclination angle $\alpha$ varies correspondingly between $\alpha=8,9°$ for the 8T pit up to $\alpha=10,6°$ for the 2T pit for the pits of table 1b.

According to Marx and Psaltis, US 5,880,838, the pit width $w_L$ is crucial for the penetration of the TE wave into the pit. By adding extensions with suitable values for the widths $w_R$ and $w_L$, with respect to the used wavelength $\lambda= 405$nm and the geometric pit depth, the phase depth for polarization $P_R$ in track T1 can be optimized. At the same time the effective pit width for $P_L$ in track T1 will be much smaller resulting in a decrease of phase depth of close to the quarter wave depth of the pit for polarization component $P_L$. This will strongly reduce the penetration of the $P_L$ wave into the pit.

However, in the neighboring track T2 the pit width and respectively the phase depth will be optimized for $P_L$ and the penetration of $P_R$ into the pits of track T2 is strongly reduced. Depending on exact pit geometries this will decrease the crosstalk from the neighboring tracks to a large extent. For each pit length, the optimum extensions x have to be calculated separately to optimize the readout with the favored polarization component and minimize the penetration of the perpendicular polarization component into the pits.

The pit structures as shown in figure 2 were used for simulations based on scalar diffraction effects for a calculation of crosstalk signals. To simulate the difference in phase depth for the two different polarization components $P_R$ and $P_L$, the actual depth of the pits has been varied by 25% and 50% rather than the phase depth. The phase depth has been estimated from the difference in pit widths listed in Table 1(a) and the graphs shown in Fig. 6. For both structures displayed in figures 2 and 3 the track pitch has been varied between 190nm and 330nm. Blu-Ray Disc type optics ($\lambda= 405$nm, NA = 0.85) have been employed for the simulations.

Figure 6 shows the phase depth as a function of the pit width in $\mu$m for pits having a geometrical pit depth equal to a quarter wavelength of the reading beam. In the region between the two indicated dashed lines, the pit width is between $\lambda/2$ and $\lambda$, $\lambda$ being adjusted for the index of refraction of the incident medium, the phase depths for the TE and TM polarization components are significantly different because the phase depth for the TE polarization component is strongly reduced in this region with regard to the TE polarization component.

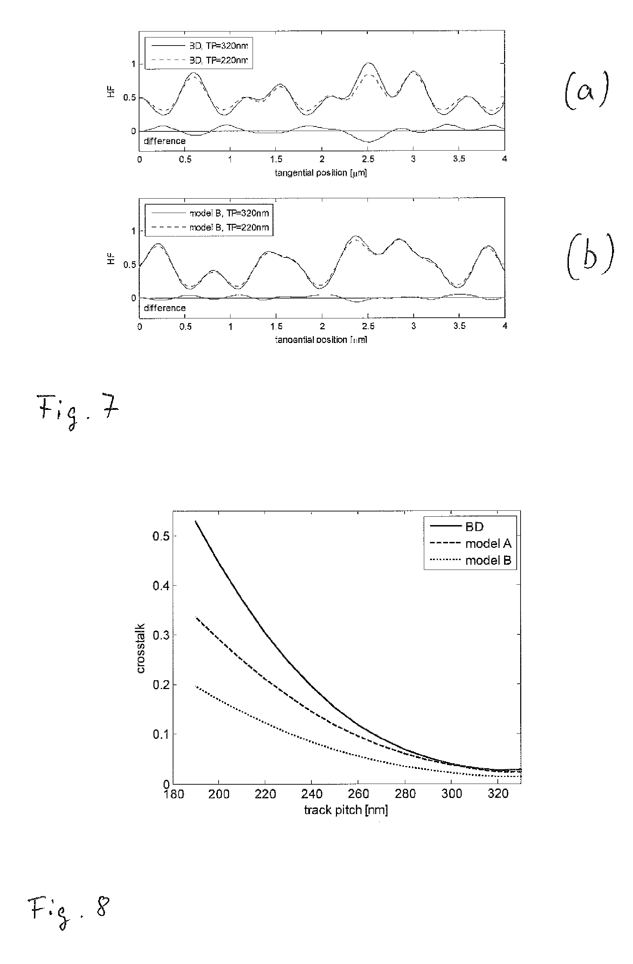

In figure 7 simulated high frequency readout signals are shown for track sections of 4 $\mu$m length as shown in figures 2 and 3 for two different track pitches TP of 220nm and 330nm. As can be seen in figure 7a, displaying HF readout signals for the not inclined pits of the tracks of figure 3, significant differences in the readout signals are obtained for small pit lengths, when the track pitch is varied from 320nm to 220 nm. For the tracks with inclined pits according to table 1b, the difference of the readout signals for the track pitches 320nm and 220nm is comparatively low also for small pit sizes. Model B is based on 50% phase depth difference.

The difference of the readout signals as shown in figures 7a, 7b can be used to calculate the crosstalk as a function of the track pitch for the Blu-Ray ROM disc track structure of figure 3 and the pit structure according to the figure 2 for 25% and 50% phase depth differences. The crosstalk CT as a function of the track pitch TP can be defined as ratio of the two standard deviations σ

$$CT(p) = \frac{\sigma\left(HF(p) - HF_0\right)}{\sigma\left(HF_0\right)} \; ;$$

with the undisturbed HF readout signal $HF_0 = HF(TP = 1920nm)$.

The graphs in Figure 8 shows that a significant reduction of the crosstalk can already be achieved with only 25% phase depth difference, model A represented by the dashed line. Assuming 50% phase depth difference, dotted line of model B according to figure 7b, the cross-talk at 220nm track pitch can be cut down to about one third in comparison with the Blu-Ray ROM type structure according to figure 7a.

A further advantage of the present invention is the fact that in spite of the reduction of the pit widths, which is necessary to reduce the track pitch, the effective pit widths $w_R$ for the polarization component $T_R$, correspondingly also for the effective pit widths $w_L$ for the polarization component $T_L$, will remain high, for example above 110 nm for the examples shown in table 1a and 1b. This is also supported by the simulations which show that the amplitude of the HF signals of a regular BD-ROM pit structure and the pit structure according to the present invention are comparable, as shown in Figs. 7a and b.

As described in US 5,880,838, the separation of the reading beam into two channels in the scanning device facilitates the generation of a radial tracking error signal. Since for each of the channels the readout is optimized, for every other track the first diffraction order of the beam generated by the double periodicity of the information layer will pass through the objective system. The interaction of the zero diffraction order and first diffraction order of the reflected beam in the pickup can be used therefore for generating a radial tracking error signal, for instance by using the well-known push-pull method.

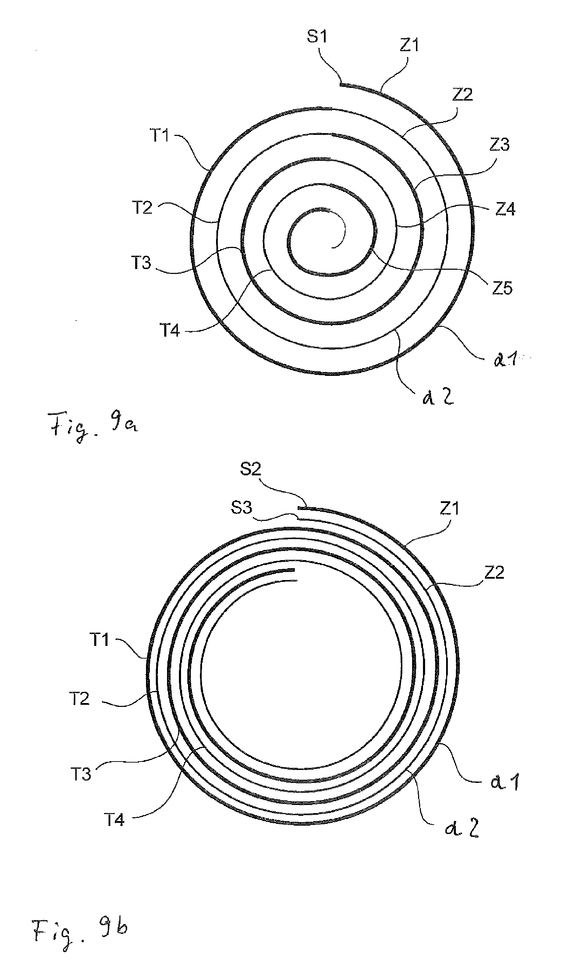

The tracks as shown in figure 2 may be arranged on an optical disc in form of spirals, as known from a DVD or a Blu-Ray disc, or in form of circular rings or segments of circular rings, as known from a DVD-RAM. In figure 9a an embodiment of a track structure is shown in a simplified manner, in which tracks T1 - T4, ... are represented by one spiral S1 on an optical disc. To provide the requirement, that the orientation of marks for neighboring tracks T1, T3 changes with regard to the track T2, the orientation of the marks as arranged in the spiral S1 has to change periodically between the first and second orientations $\alpha1$ and $\alpha2$. This can be made by partitioning the spiral S1 into sequences Z1, Z3, Z5, ..., which have only marks of the first orientation $\alpha1$, indicated by fat line segments, and interleaved sequences Z2, Z4, ..., indicated by thin line segments, which contain only marks with the orientation $\alpha2$. When the length of each of the segments Z1 - Z5 has the length of one revolution respectively 360°, the requirement is fulfilled, that the orientation of marks of a neighboring track is always different with regard to a specific track, as shown in figure 9a.

The length of the sequences Z1, Z2, ... can be alternatively also smaller, and in particular, if successive sequences have a length of 1/(1+2n) of a perimeter of 360°, it can be easily shown that the requirement is also fulfilled, that the orientation of marks of one of the tracks is always different from the orientation of marks of the neighboring tracks, when n = 1, 2, 3, ...,. But an optical disc with shorter sequences is more difficult to master, and therefore sequences Z1, Z2, ... having the length of the perimeter of 360° seem to be the optimum.

A second embodiment is shown in figure 9b in a simplified manner, in which tracks T1 - T4 are arranged as two spirals S2, S3 on an optical disc. The first spiral S2 comprises only marks with the first orientation $\alpha1$, tracks T1, T3, and the second spiral S3 comprises only marks with the second orientation $\alpha2$, tracks T2, T4. The first spiral S2 is interleaved with the second spiral S3 such, that the tracks T1, T3 belong to the first spiral S2, and the tracks T2, T4 of the second spiral S3 are correspondingly interleaved between the tracks T1, T3. For such an arrangement then also the condition is fulfilled, that the orientation of marks of one of the tracks is always different from the orientation of marks of the neighboring tracks. Therefore, both embodiments of figures 9a, 9b correspond with the track pattern as shown in figure 2, and therefore a push-pull signal can be obtained even, when the track pitch is below the optical resolution limit.

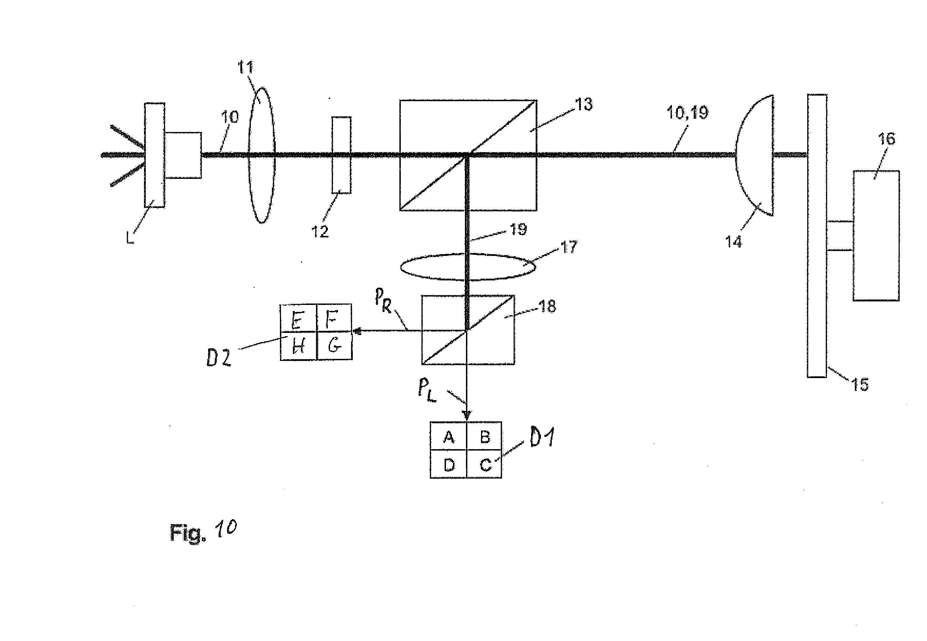

A preferred embodiment of an apparatus for reading digital data from an optical storage medium as explained with regard to figures 1 and 2 is shown in figure 10. The apparatus comprises a motor 16 with a turntable, on which an optical disc 15 is placed, and a pickup with a laser L. The laser L generates a light beam 10, which is collimated by a collimator lens 11 in the direction of an objective lens 14 for providing a beam spot with a very small focus and a high beam intensity on the disc 15. The laser L is for example a blue laser diode as used in a Blu-Ray disc recorder or reader.

The apparatus comprises further a tracking and focusing mechanism, not shown, which moves the pickup with the objective lens 14 across the rotating disc 15 for reading of coded data of a track. This mechanism, which can be of an actuator type or a swing arm, performs in particular a tracking movement and a focus movement for keeping the beam spot of the laser L onto a selected track of the optical disc 15 for reading the data of this track.

The pickup comprises further a first optical element 12 for providing a beam with linear polarization components $P_R$ and $P_L$ for the illumination of the disc 15. The optical element 12 is for example a quarter-wave plate, which generates a light beam with two perpendicular circular polarization components of equal intensity. The optical element 12 is arranged in the beam 10 between the laser L and a non-polarizing beam-splitter 13, which is arranged such that the beam 10 coming from the laser L passes through the beam-splitter 13 essentially unaffected, and the reflected beam 19 coming from the disc 15 is directed to a detection unit without changing the polarization of the beams 10 and 19.

The detection unit of the pickup comprises a second optical element 18 for separating the polarization components $P_R$ and $P_L$, as reflected from the disc 15, and a first detector D1 and a second detector D2. The second optical element 18 is for example a polarizing beam-splitter, which reflects the polarization component $P_R$ under an angle of 90° into the direction of the second detector D2, and which is arranged such that the polarization component $P_L$ passes through the polarizing beam-splitter 18 essentially unaffected onto the first detector D1. The detection unit comprises advantageously further a focus lens 17 ahead of the second optical element 18, in particular an astigmatic focus lens, for focusing the reflected beam 19 onto the detectors D1, D2.

The detector D1 is for example a four-segment detector with segments A - D, and the detector D2 is a four-segment detector with segments E - F, as known. The segments are used for providing a HF data signal as well as tracking and focus error signals. For reading data of consecutive sequences Z1-Z3 of different orientations $\alpha1$, $\alpha2$ as shown in figure 9a, from one detector signal to the other detector signal is switched at the changeover locations. The detector signal of a single detector D1 respectively D2 is used in particular for providing a push-pull signal for a tracking regulation of a sequence with a specific orientation.

An optical storage medium having a pit structure as shown in figure 2 can be applied advantageously for a high data density Super-RENS optical ROM disc, comprising a layer with a super resolution near field structure, as described with regard to figure 1. But the invention may be used also for writable or re-writable storage media comprising for example a data layer with a phase change material. The expression "marks" is therefore used in this specification and the claims for describing tracks with a pit/land data structure as well as for describing tracks with a mark/space data structure. The track pitch is in particular selected below 280 nm for use with a pickup having a semiconductor laser emitting light with a wavelength of e.g. about 405 nm. But also other embodiments may be utilized by a person skilled in the art without departing from the spirit and scope of the present invention. The invention resides therefore in the claims herein after appended.

**Claims**

1. Optical storage medium (1, 15) comprising a substrate layer (2) and a data layer (3) with a mark/space structure arranged in tracks (Tn), **characterized in that** a sequence (Z1; Z3) of marks of a first track (T1; T3) has a first orientation ($\alpha1$) with regard to the track direction (t) and a sequence (Z2; Z4) of marks of a neighboring track (T2; T4) has a second orientation ($\alpha2$) being different from the first orientation ($\alpha1$).

2. The optical storage medium according to claim 1, **wherein** the marks of the first track (T1; T3) are inclined to the track direction (t) by a positive angle ($\alpha1$), and the marks of the neighboring track (T2; T4) are inclined to the track direction by a negative angle ($\alpha2$).

3. The optical storage medium according to claim 1 or 2, **wherein** the orientation of marks ($\alpha1$, $\alpha2$) of consecutive neighboring tracks (Tn, Tn+1) is alternating between the first orientation ($\alpha1$) and the second orientation ($\alpha2$).

4. The optical storage medium according to claim 1, 2 or 3, **wherein** the optical storage medium is an optical disc (1), on which the tracks (Tn) are arranged as spirals (S1 - S3), circular rings or segmented circular rings.

5. The optical storage medium according to claim 4, **wherein** the storage medium comprises a spiral (S1) having sequences (Z1-Z5) of marks of different orientations ($\alpha1$, $\alpha1$) changing alternatingly between the first orientation ($\alpha1$) and the second orientation ($\alpha2$) for consecutive sequences (Z1-Z5).

6. The optical storage medium according to claim 5, **wherein** the tracks (Tn) are arranged as a single spiral (S1) on the optical disc, and wherein the orientation of the marks changes after one revolution, or after 1/(1+2n) of a revolution with n=1, 2, 3, ..., between the first and the second orientation ($\alpha1$, $\alpha2$).

7. The optical storage medium according to claim 4, **wherein** the tracks (T1, T2) are arranged on the optical disc as two or more spirals (S2, S3) having different orientations, one spiral (S2) including essentially only marks of the first orientation ($\alpha1$) and a neighboring spiral (S3) including essentially only marks of the second orientation ($\alpha2$).

8. Optical storage medium according to claim 7, **wherein** the tracks (T1, T2) are arranged on the optical disc as two spirals, a first spiral (S2) comprising only marks of the first orientation ($\alpha1$) and the second spiral (S3) comprising only marks of the second orientation ($\alpha2$).

9. Optical storage medium according to one of the preceding claims, **wherein** the marks of the first track (T2, T4) are inclined to the track direction by a positive angle ($\alpha$1) having an absolute value within a range of 5°-15°, and the marks of the neighboring track (T1, T3, T5) are inclined to the track direction by a negative angle ($\alpha$2) having an absolute value within a range of 5°-15°.

10. Optical storage medium according to one of the preceding claims, **wherein** the optical storage medium is a read only optical disc comprising a mark/space structure represented by pits and lands.

11. Optical storage medium according to one of the preceding claims, **wherein** the optical storage medium (1, 15) is a Super-RENS disc comprising a layer with a super resolution near field structure, and wherein the track pitch (TP) between neighboring tracks (Tn, Tn+1) is below the optical resolution limit of a pickup of an apparatus for reading data from the disc.

12. The optical storage medium according to one of the preceding claims, **wherein** the optical storage medium (1, 15) is a Super-RENS disc comprising a layer with a super resolution near field structure, and wherein the track pitch (TP) between neighboring tracks (Tn, Tn+1) is below 280 nm for use with a pickup having a semiconductor laser emitting light with a wavelength within a range of 400-450 nm.

13. Apparatus comprising a pickup for reading data from an optical storage medium in accordance with one of the claims 1 - 12, **wherein** the apparatus comprises two detectors (D1, D2), one detector for reading tracks with marks of the first orientation ($\alpha$1) and one detector for reading tracks with marks of the second orientation ($\alpha$2).

14. Apparatus in accordance with claim 13, **wherein** the pickup provides a reading beam with two orthogonal polarization components ($P_R$, $P_L$), one being inclined by 45° with regard to the track direction (t) and the other being inclined by -45° with regard to the track direction (t).

15. Apparatus in accordance with claim 13 or 14, **wherein** a detector signal of a single detector (D1, D2) is used for providing a push-pull signal for a tracking regulation, and wherein from one detector signal to the other detector signal is switched for reading data of sequences (Z1-Z3) of different orientations ($\alpha$1, $\alpha$2).

Laser beam

**Fig. 1**

**Fig. 2**

Fig. 3
Prior Art

Fig. 4a

Fig. 4b

| pits | l | w | a) | x | $w_R$ | $(w_R-w_L)/w_R$ | b) | x | $w_R$ | $(w_R-w_L)/w_R$ |
|------|-----|----|----|----|-------|-----------------|----|----|-------|-----------------|
| 2T | 80 | 50 | | 15 | 113.1 | 0.32 | | 15 | 113.1 | 0.32 |
| 3T | 120 | 50 | | 30 | 150.9 | 0.40 | | 21 | 121.7 | 0.30 |
| 4T | 160 | 50 | | 50 | 205.7 | 0.48 | | 28 | 133.7 | 0.30 |
| 5T | 200 | 50 | | 70 | 261.1 | 0.52 | | 35 | 145.7 | 0.30 |
| 6T | 240 | 50 | | 70 | 239.6 | 0.45 | | 40 | 152.7 | 0.29 |
| 7T | 280 | 50 | | 70 | 226.3 | 0.40 | | 45 | 160.1 | 0.28 |
| 8T | 320 | 50 | | 70 | 217.2 | 0.36 | | 50 | 167.6 | 0.27 |

Fig. 5

Fig. 6

(a)

(b)

Fig. 7

Fig. 8

Fig. 9a

Fig. 9b

Fig. 10

Europäisches
Patentamt

European
Patent Office

Office européen
des brevets

# EUROPEAN SEARCH REPORT

Application Number

EP 08 30 5643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 058 434 A (PHILIPS NV) 8 April 1981 (1981-04-08) * page 1, line 83 - line 85; figures 16,17,20 * * page 12, line 55 - line 71 * * page 12, line 91 - line 114 * * page 9, line 47 - line 73 * * figures 5-7,16-20 * ----- | 1-15 | INV. G11B7/007 |
| X | WO 2006/056947 A (KONINKL PHILIPS ELECTRONICS NV [NL]; VAN DER LEE ALEXANDER M [NL]; T H) 1 June 2006 (2006-06-01) * abstract; figures 2,3 * ----- | 1,3,4, 10,13,14 | |
| X | EP 0 534 601 A (PIONEER ELECTRONIC CORP [JP]) 31 March 1993 (1993-03-31) * abstract * * page 8, line 40 - line 53; figure 6 * ----- | 1-4,7 | |
| X | US 4 310 916 A (DIL JAN G) 12 January 1982 (1982-01-12) * abstract; figures 13,14 * ----- | 1-15 | TECHNICAL FIELDS SEARCHED (IPC) |
| A | EP 1 764 792 A (THOMSON LICENSING [FR]) 21 March 2007 (2007-03-21) * paragraph [0007]; figure 2 * ----- | 15 | G11B |
| A | WO 03/034412 A (KONINKL PHILIPS ELECTRONICS NV [NL]; VAN KESTEREN HANS W [NL]) 24 April 2003 (2003-04-24) * the whole document * ----- | 1-15 | |
| A | EP 0 633 565 A (PIONEER ELECTRONIC CORP [JP]) 11 January 1995 (1995-01-11) * column 2, line 30 - column 3, line 10 * ----- | 1-15 | |

-/--

The present search report has been drawn up for all claims

| Place of search | Date of completion of the search | Examiner |
|---|---|---|
| The Hague | 9 February 2009 | Schweiger, Dietmar |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 2 172 934 A1

Europäisches Patentamt
European Patent Office
Office européen des brevets

# EUROPEAN SEARCH REPORT

Application Number

EP 08 30 5643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 968 048 A (THOMSON OHG DEUTSCHE [DE]) 10 September 2008 (2008-09-10) * abstract; figures 1-4 * | 1-15 | |
| A | GB 2 091 028 A (PHILIPS NV) 21 July 1982 (1982-07-21) * abstract; figure 2 * | 1-15 | |
| A | US 4 084 185 A (DE LANG HENDRIK ET AL) 11 April 1978 (1978-04-11) * the whole document * | 1-15 | |

TECHNICAL FIELDS SEARCHED (IPC)

The present search report has been drawn up for all claims

| Place of search | Date of completion of the search | Examiner |
|---|---|---|
| The Hague | 9 February 2009 | Schweiger, Dietmar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 30 5643

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2009

| Patent document cited in search report | | Publication date | Patent family member(s) | | Publication date |
|---|---|---|---|---|---|
| GB 2058434 | A | 08-04-1981 | AT | 369578 B | 10-01-1983 |
| | | | AU | 537557 B2 | 28-06-1984 |
| | | | AU | 6192380 A | 12-03-1981 |
| | | | BR | 8005553 A | 17-03-1981 |
| | | | CA | 1150409 A1 | 19-07-1983 |
| | | | CH | 662667 A5 | 15-10-1987 |
| | | | DD | 153012 A5 | 16-12-1981 |
| | | | DE | 3032769 A1 | 16-04-1981 |
| | | | DK | 371780 A | 04-03-1981 |
| | | | ES | 8105108 A1 | 01-08-1981 |
| | | | ES | 8201757 A1 | 16-03-1982 |
| | | | FR | 2464532 A1 | 06-03-1981 |
| | | | IT | 1132631 B | 02-07-1986 |
| | | | JP | 1021543 B | 21-04-1989 |
| | | | JP | 1541102 C | 31-01-1990 |
| | | | JP | 56037835 A | 11-04-1981 |
| | | | NL | 7906576 A | 05-03-1981 |
| | | | NZ | 194817 A | 02-09-1983 |
| | | | SE | 445960 B | 28-07-1986 |
| | | | SE | 8006065 A | 04-03-1981 |
| | | | US | 4325135 A | 13-04-1982 |
| | | | ZA | 8005225 A | 28-04-1982 |
| WO 2006056947 | A | 01-06-2006 | NONE | | |
| EP 0534601 | A | 31-03-1993 | JP | 5089477 A | 09-04-1993 |
| US 4310916 | A | 12-01-1982 | AT | 371273 B | 10-06-1983 |
| | | | AU | 534699 B2 | 09-02-1984 |
| | | | AU | 6270780 A | 09-04-1981 |
| | | | CA | 1150411 A1 | 19-07-1983 |
| | | | DE | 3071599 D1 | 19-06-1986 |
| | | | DK | 403880 A | 28-03-1981 |
| | | | EP | 0026517 A1 | 08-04-1981 |
| | | | ES | 8105877 A1 | 01-09-1981 |
| | | | ES | 8200961 A1 | 16-02-1982 |
| | | | JP | 1637642 C | 31-01-1992 |
| | | | JP | 2055850 B | 28-11-1990 |
| | | | JP | 56058144 A | 21-05-1981 |
| | | | NL | 7907180 A | 31-03-1981 |
| | | | NZ | 195037 A | 18-11-1983 |
| | | | ZA | 8005546 A | 28-04-1982 |
| EP 1764792 | A | 21-03-2007 | NONE | | |
| WO 03034412 | A | 24-04-2003 | CN | 1571995 A | 26-01-2005 |

For more details about this annex : see Official Journal of the European Patent Office, No. 12/82

EPO FORM P0459

**ANNEX TO THE EUROPEAN SEARCH REPORT
ON EUROPEAN PATENT APPLICATION NO.**

EP 08 30 5643

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2009

| Patent document cited in search report | | Publication date | Patent family member(s) | | Publication date |
|---|---|---|---|---|---|
| WO 03034412 | A | | JP | 2005505881 T | 24-02-2005 |
| | | | US | 2004252623 A1 | 16-12-2004 |
| EP 0633565 | A | 11-01-1995 | DE | 69424003 D1 | 25-05-2000 |
| | | | DE | 69424003 T2 | 11-01-2001 |
| | | | JP | 7021569 A | 24-01-1995 |
| | | | US | 5559787 A | 24-09-1996 |
| EP 1968048 | A | 10-09-2008 | CN | 101295517 A | 29-10-2008 |
| | | | EP | 1968050 A2 | 10-09-2008 |
| | | | JP | 2008226436 A | 25-09-2008 |
| | | | US | 2009028040 A1 | 29-01-2009 |
| GB 2091028 | A | 21-07-1982 | AT | 374606 B | 10-05-1984 |
| | | | AU | 544929 B2 | 20-06-1985 |
| | | | AU | 7940882 A | 22-07-1982 |
| | | | BE | 891747 A1 | 12-07-1982 |
| | | | CA | 1184297 A1 | 19-03-1985 |
| | | | CH | 657930 A5 | 30-09-1986 |
| | | | DE | 3200187 A1 | 12-08-1982 |
| | | | ES | 8302943 A1 | 16-04-1983 |
| | | | FR | 2497990 A1 | 16-07-1982 |
| | | | HK | 76286 A | 17-10-1986 |
| | | | IT | 1149422 B | 03-12-1986 |
| | | | JP | 1882422 C | 10-11-1994 |
| | | | JP | 6001562 B | 05-01-1994 |
| | | | JP | 57138065 A | 26-08-1982 |
| | | | NL | 8100098 A | 02-08-1982 |
| | | | SE | 454628 B | 16-05-1988 |
| | | | SE | 8200064 A | 13-07-1982 |
| | | | US | 4423502 A | 27-12-1983 |
| US 4084185 | A | 11-04-1978 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5880838 A